# EUROPEAN PATENT APPLICATION

(11) **EP 1 426 437 A1**
(43) Date of publication of application: **09.06.2004**
(21) Application number: 02713233.1
(22) Date of filing: 28.03.2002
(51) Int. Cl.: C12C 7/01, C12C 7/04

(54) **PROCESS FOR PRODUCING FERMENTED ALCOHOLIC DRINK**

(30) Priority: 17.08.2001 JP 2001248295
(71) Applicant: KIRIN BEER KABUSHIKI KAISHA, Tokyo 104-8288 (JP)
(72) Inventor: YASUI, Tetsuji, KIRIN BEER KABUSHIKI KAISHA, Yokohama-shi, Kanagawa 230-8628 (JP); HORI, Toshihiko, KIRIN BEER KABUSHIKI KAISHA, Yokohama-shi, Kanagawa 230-8628 (JP); MATSUURA, Chikako, KIRIN BEER KABUSHIKI KAISHA, Yokohama-shi, Kanagawa 230-8628 (JP); TAYAMA, Tomohiro, KIRIN BEER KABUSHIKI KAISHA, Yokohama-shi, Kanagawa 230-8628 (JP); ITO, Toshiya, KIRIN BEER KABUSHIKI KAISHA, Yokohama-shi, Kanagawa 230-8628 (JP)
(74) Representative: HOFFMANN - EITLE
(86) International application number: PCT/JP2002/003095
(87) International publication number: WO 2003/016457

(57) **Abstract**

The present invention provides a process for producing wort with reduced content of a stale flavor-causing substance for the purpose of producing fermented alcoholic beverages such as beer and the like, in which the generation of a stale flavor is suppressed, and to provide a process for producing fermented alcoholic beverages such as beer and the like, in which the generation of a stale flavor is suppressed by using the wort obtained by said process. It becomes possible to produce fermented alcoholic beverages such as beer and the like, in which the generation of a stale flavor is suppressed, as a result of reducing a stale flavor-causing substance in wort by adjusting the grist fineness of a cereal raw material that are used for producing fermented alcoholic beverages such as beer and the like, i.e. by grinding the grains of a cereal raw material more coarsely than usual. The grist fineness of a cereal raw material can be evaluated by the EBC husk fraction by applying the trans-2-nonenal-poteintial in total filtrated wort as an indicator and adjusted thereby.

## Description

### Technical Field

The present invention relates to a process for producing fermented alcoholic beverages such as beer and the like, in which the development of a stale flavor is suppressed, and more particularly to a process for producing fermented alcoholic beverages such as beer and the like, in which the development of a stale flavor is suppressed as a result of reducing a stale flavor-causing substance in wort by adjusting the grist fineness of a cereal raw material that is used for producing fermented alcoholic beverages such as beer and the like.

### Background Art

In fermented alcoholic beverages such as beer and the like with malt as a raw material, chemical reactions such as oxidation and the like are accelerated due to the passage of time, the rise in temperature, and so on, thereby progressing the deterioration of the products. Products once deteriorated suffer from damage to their original taste and flavor contained in fermented alcoholic beverages and their quality is deteriorated.

The following mechanisms have been presented with regard to the generation of a beer stale flavor which deteriorates the taste of fermented alcoholic beverages such as beer and the like. They are: Maillard reaction and Strecker degradation of amino acids; autoxidation of fatty acids and enzymatic oxidation of lipids; oxidative degradation of a bitter substance in the hop, oxidation of alcohols through melanoidines, oxidation of the unsaturated hydroxyfatty acids or alcohols catalyzed with a metal ion (Cu, in particular); and oxidation of higher alcohols. These or some among these are thought to be involved in the development of the stale flavor (Hideo MIYAJI, "Beer Brewing Technology", Shokuhin Sangyo Shimbunsha, Co., Ltd., published on Dec. 28, 1999; pp.418-424).

A stale flavor itself has been studied. Trans-2-nonenal is exemplified as one of the substances causing a stale flavor. One of the pathways for the formation of this substance is as follows: a trans-2-nonenal precursor (a hydroxide derivative), derived from lipid or the fatty acid in the raw material. is formed upon both enzymatic and non-enzymatic oxidations in the course of wort preparation, which further leads to the formation of trans-2-nonenal through the oxidative degradation. It is argued that, even though the above-mentioned precursor is removed to a high degree in the courses of fermentation and maturation, the precursor transfers on to the finished beer and then, by the later oxidation, trans-2-nonenal generates is formed in the beer and the like. It is, however, rather thought that trans-2-nonenal produced in the wort forms Schiff bases with primary amines, such as amino acids, in the wort and that some of the Schiff bases are passed on to the beer and the like, where trans-2-nonenal is freed from Schiff bases depending on the temperature- or pH-condition, although many of them are removed in the courses of fermentation and maturation (Lermusieau et al., J. Am. Soc. Brew. Chem. 57, 1999, p.29-33).

In order to prevent such quality deterioration in fermented alcoholic beverages, various attempts have been made as shown below. For example, the publication of Japanese Laid-Open Patent Application No.1993-137555 describes a process referring to the use of malt wherein lipid is removed in advance from the beer malt by sub-critical or super-critical carbon dioxide, as a process for producing beer with the use of malt from which lipid, which damages quality, has been selectively and efficiently removed without affecting enzymes in the malt, in beer or in the beer production process. The publication of Japanese Laid-Open Patent Application No. 2000-4867 describes a production process for malt alcoholic beverages with high flavor stability and a controlling method for the production process. The description continues that, in the production process for malt alcoholic beverages including the process of: selection of raw materials including malt; wort production; fermentation; maturation; filtration; and packaging, 5-hydroxymethylfurfural or its precursor is selected as an indicator for flavor stability and malt alcoholic beverages with high flavor stability can be produced by successfully suppressing this indicator substance in the course of production. It further discloses specific examples including a method of suppressing 5-HMF generation by adding an amino acid which has a thiol group and a method of giving the anti-oxidation property to the wort by the addition of catechin.

On the other hand, in conventional brewing, malt as primary ingredient is produced by germinating barley which is a whole-grain cereal containing the husk, and such produced malt is also in the form of whole-grain cereal containing the husk. Malt is milled, then subjected to mashing process. The grist fineness is usually evaluated by using a Pfungstädter plansifter in which 100 to 200g of grist are separated on five sieves into six fractions. In EBC method (an analysis method of European Brewery Convention), grist fineness shown in Table 2 is usually taken as normal values (Hideo MIYAJI, "Beer Brewing Technology", (published on Dec. 28, 1999), p.218).

**Table 1**

| EBC Method | | | | | |
|---|---|---|---|---|---|
| Sieve no. | Mesh No./cm² | Mesh hole hole size in mm | Wire thickness in mm | Fraction | Web No |
| 1 | 39.7 | 1.270 | 0.31 | Husks | 16 |
| 2 | 62.4 | 1.010 | 0.26 | Coarse grits | 20 |
| 3 | 207.4 | 0.547 | 0.15 | Fine grits I | 38 |
| 4 | 961.0 | 0.253 | 0.07 | Fine grits II | 85 |
| 5 | 2714.4 | 0.152 | 0.04 | Flour | 140 |
| Bottom | - | - | - | Fine flour | PAN |

**Table 2**

| Fraction | Lauter tun grist | Mash filter grist | Hammer mill grist |
|---|---|---|---|
| Husks | 18 | 11 | 0.6 |
| Coarse grits | 8 | 4 | 0.9 |
| Fine grits I | 35 | 16 | 7.0 |
| Fine grits II | 21 | 43 | 14.3 |
| Flour | 7 | 10 | 12.0 |
| Fine flour | 11 | 16 | 65.2 |

The coarsest fraction on the sieve (EBC method sieve 1)( "Beer Brewing Technology", p.218, as described previously) is referred to as the husk fraction (hereinafter "EBC husk fraction"). Said fraction contains the part attached to husk (aleurone layer), and endosperm of coarse grits as well as the husk. This husk fraction also plays a role of a filter layer for filtration. The grist fineness of malt and the like is determined by the relation between extract yield and filterability usually in the case of producing wort by using said malt. In other words, as the grist fineness of malt is increased, the extract yield increases with lowered filterability, while as the grist fineness is lowered, the filterability is improved with decreased extract yield. EBC husk fraction of malt grists obtained as a result of milling is usually approximately 20% (8 - 12% for pure husk parts) when the filtration is performed using lauter tun, while it is 20 - 30% for well-modified malt.

The subject of the present invention is to provide a process for producing wort with reduced content of a stale flavor-causing substance for the purpose of producing fermented alcoholic beverages such as beer and the like in which the generation of a stale flavor is suppressed, and to provide a process for producing fermented alcoholic beverages such as beer and the like in which the generation of a stale flavor is suppressed by using wort obtained by this production process.

As a result of a keen study on the process for producing fermented alcoholic beverages such as beer and the like, in which the development of a stale flavor is suppressed, the present inventors found out that fermented alcoholic beverages such as beer and the like, in which the development of a stale flavor is suppressed, can be produced as a result of reducing the content of a stale flavor-causing substance in wort, by adjusting the grist fineness of a cereal raw material used in producing the fermented alcoholic beverages such as beer and the like, i.e. by grinding the grist fineness of the grains of a cereal raw material more coarsely than usual. Thus the present invention has been completed. In the present invention, the grist fineness of a whole-grain cereal raw material containing whole or part of the husk is adjusted by applying the trans-2-nonenal potential in the total filtrated wort as an indicator so that the trans-2-nonenal potential in the total filtrated wort is reduced by at least 1 ppb in terms of sugar content 11° P. Milling of the grains of a cereal raw material of the present invention can be carried out by using the trans-2-nonenal potential as an indicator, and by adjusting with EBC husk fraction rate as mentioned above.

### Disclosure of the Invention

The present invention relates to a process for producing fermented alcoholic beverages wherein a stale flavor-causing substance in wort is reduced by grinding the grains of a whole-grain cereal raw material containing whole or part of the husk more coarsely than usual, in the course of producing fermented alcoholic beverages such as beer and the like (claim 1), and the process for producing fermented alcoholic beverages according to claim 1, wherein the grist fineness of the whole-grain cereal raw material containing whole or part of the husk is adjusted by applying a trans-2-nonenal potential in the total filtrated wort as an indicator so that the trans-2-nonenal potential is reduced by at least 1 ppb in terms of sugar content 11° P (claim 2).

The present invention further relates to: the process for producing fermented alcoholic beverages according to claim 1 or 2, wherein the whole-grain cereal raw material containing whole or part of the husk is malt or barley (claim 3); the process for producing fermented alcoholic beverages according to claim 1 or 2, wherein the grist fineness is over 30 in the EBC husk fraction % (EBC sieve 1) when the whole-grain cereal raw material containing whole or part of husk is malt (claim 4); the process for producing fermented alcoholic beverages according to claim 4, wherein the EBC husk fraction % (EBC sieve 1) is 40 - 80 (claim 5).

### Brief Description of Drawings

Fig. 1 shows the influence of the grist fineness of malt on the trans-2-nonenal potential (NP) in the present invention.
Fig. 2 shows the influence of the grist fineness of barley on the trans-2-nonenal potential (NP) and the percentage of extract yield in the present invention.

### Best Mode of Carrying Out the Invention

The present invention is comprised of reducing a stale flavor-causing substance in wort by grinding the grist fineness of a whole grain cereal raw material containing whole or part of the husk more coarsely than usual in producing fermented alcoholic beverages such as beer and the like. A cereal raw material can be exemplified by malt or barley which is used as an adjunct. As for a whole-grain cereal raw material containing whole or part of the husk, the one in which part of the husk is removed to the extent of not affecting the formation of filter layer in wort filtration can be used. In the present invention, a whole-grain cereal raw material containing part of the husk means a granulated cereal raw material peeled to the extent that the part which is enriched with lipid and fatty acid of which many are contained in surface layers of grain is not completely removed.

The degree of development of stale flavor in beer can be predicted, by applying the trans-2-nonenal potential in a total filtrated wort as an indicator. The trans-2-nonenal potential (hereinafter NP) as an indicator is indicated by the trans-2-nonenal amount formed by adding a certain amount (1/5 or 1/10 part of a buffer) of wort to an acetate buffer of pH4 and boiled for a certain period of time (2 hours) with respect to a combination of the trans-2-nonenal (e.g. Schiff base) and its precursor. In the present invention, the grist fineness of a whole-grain cereal raw material containing whole or part of the husk is adjusted by applying the trans-2-nonenal potential in total filtrated wort as an indicator so that the trans-2-nonenal potential in the total filtrated wort is reduced by at least 1 ppb in terms of sugar content 11° P. For example, the NP content in a total filtrated wort in which sugar content is adjusted at 11° P usually ranges approximately between 7 - 10 ppb, although it depends on the type of beer.

The grist fineness of a cereal raw material of the present invention can be indicated by the EBC husk fraction rate (weight % of husk fraction) and adjusted thereby. An EBC husk fraction of malt grists obtained by milling is usually around 20% when the filtration is carried out by employing lauter tun (pure husk part is 8 - 12%), however, it is considered to be possible even with 20 - 30% for well-modified malt.

In the present invention, therefore, the grist fineness of a cereal raw material is set more coarsely to reduce a stale flavor-causing substance in wort. As for the case of the whole-grain malt containing the husk, the reduction of equal or greater than 1 ppb of NP can be achieved in NP of filtrated wort if there is 30% EBC husk fraction compared to the usual 20% EBC husk fraction when the ingredient composition is 100% malt. If NP of filtrated wort is reduced by approximately 1 ppb, a stale flavor in final products can be significantly reduced. In the present invention, at least over 30, or preferably, 40 - 80 is adopted for the EBC husk fraction % of a milled cereal raw material such as malt.

In the present invention, the trans-2-nonenal which is one of the stale flavor can be reduced by milling a whole-grain cereal raw material including whole or part of the husk coarsely. It is considered to be partly because the extraction of lipids and fatty acids of the raw material, and enzymes related to them is suppressed by the behavior of the trans-2-nonenal mentioned above in the process for producing beer or the like.

In the present invention, the grist fineness of a cereal raw material is set more coarsely than usual in order to reduce the stale flavor-causing substance in wort. On the other hand, therefore, the prevention of reduction in extract yield is considered to be partly compensated by milling a cereal raw material coarsely within an allowable range, and by using well-modified malt or industrial enzymes.

Accordingly, when whole-grain cereals, such as malt, barley and the like, containing whole or part of the husk are used together, both or either of them can be milled optionally and coarsely, and composed so that the NP content of filtrated wort is reduced by approximately 1 ppb. For example, when malt and barley are used, both of malt and barley or either of them are optionally milled coarsely, then the composition is to be adjusted so that the NP content of filtrated wort is reduced by at least equal or lower than 1 ppb, while suppressing the reduction in extract yield from the composition by using the relation between the grist fineness, the NP content and extract content of filtrated wort.

The present invention will be explained more specifically with reference to the following examples, but these examples will not limit the scope of the invention.

### Example 1 [The grist fineness of malt, extract content and NP ( trans-2-nonenal potential) of prepared wort (filtrated wort)]

### [Determination of NP]

Wort was added to 0.2 M acetate buffer (pH4) with the amount of 1/5 or 1/10 of the buffer, the buffer container was capped and the Buffer with wort was then boiled for 2 hours, which was then cooled to room temperature. Trans-2-nonenal was extracted by solid-phase extraction using a Sep-Pak C18 cartridge according to the method of Verhagen et al. (J. Chromatgr., 393 (1987) 85-96), trans-2-nonenal was then derivatized with dansyl hydrazine, and then analyzed by HPLC ("HP1100"; Hewlett-Packard) employing a column switching method. In performing a column switching method, a 100 x 4.6 mm analytical column 1("ODS-AM", YMC-Pack) and a 250 x 4.6 mm analytical column 2 ("ODS-AM", YMC-Pack) were used at a flow rate of 1.0 ml/min and 0. 85 ml/min, respectively. The resultant trans-2-nonenal per wort unit is expressed by ppb and indicated as NP.

### [Sugar content and NP in the filtrated wort with changes in wort grist fineness of malt]

As shown in Table 3, malt was provided for the following mashing process by changing the grist fineness.

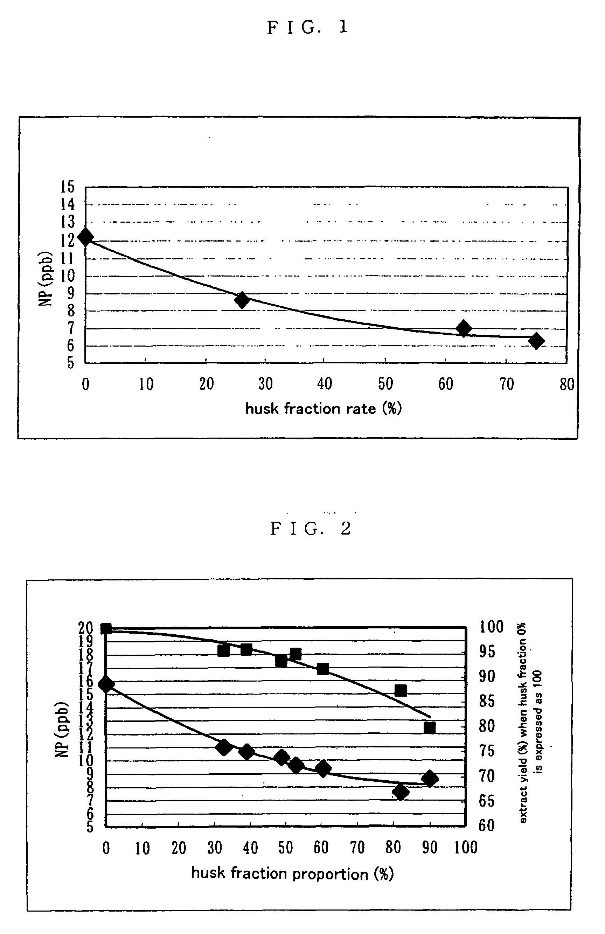

The mixture of malt : hot water = 1 : 3 (malt 50g : hot water 150 ml) was mashed at the temperature program of 30 mins. at 50° C, 60 mins. at 65° C and 10 mins. at 78° C. After adding 150 ml of hot water, the resulting mash was filtered through a funnel using a filter paper. Sugar content and NP of each of the filtered worts were determined. As for sugar content (extract), sugar content (° P) was calculated by measuring the specific gravity and from a conversion table. Table 4 and Fig. 1 show the results.

The results of Fig. 1 show that, if it is evaluated by EBC husk fraction rate, the reduction effect of 1 ppb of NP with 30% EBC husk fraction, and 2 ppb of NP with 40% were acknowledged in comparison to the ones with about 20% of said husk fraction which shows conventional grist fineness. Therefore, beer wherein a stale flavor is suppressed can be produced by using malt that is milled coarsely to over 30% by EBC husk fraction for the beer with 100% malt, and to over 35% for the beer with the malt composition of 67%. Moreover, the loss of extract can be suppressed by less than 2% compared to the usual grist fineness. Further, the β-glucan content in filtrated wort is also reduced, and improvement of filtration can also be expected.

**Table 3**

| Experimental | Husks (Sieve 1) | Coarse grits (Sieve 2) | Fine grits I EBC (Sieve 13) | Fine Grain II grits II of EBC (Sieve 14) | Fine Powder of Flour EBC (Sieve 15) | Micropowder Fine Flour of EBC( Sieve 1bottom) |
|---|---|---|---|---|---|---|
| 1 | 0% | 0% | 5% | 36% | 27% | 32% |
| 2 | 26 | 25 | 28 | 8 | 4 | 9 |
| 3 | 63 | 10 | 13 | 5 | 2 | 6 |
| 4 | 75 | 7 | 8 | 4 | 2 | 4 |

**Table 4**

| Experimental | Extract yield (Experimental 1 as 100) | NP in terms of 11° P (ppb) | β-Glucan in terms of 11° P (ppm) |
|---|---|---|---|
| 1 | 100 | 12.2 | 61 |
| 2 | 100 | 8.6 | 40 |
| 3 | 97 | 7.0 | 27 |
| 4 | 94 | 6.3 | 20 |

### Example 2 [Grist fineness of barley, extract content and NP in prepared wort (filtrated wort)]

### (Test Example 1)

Barley was provided for the following mashing process with various levels of grist fineness. For the case of barley, the mach was supplemented by a suitable mixture of industrial enzymes.

After adding industrial enzymes (mixture of α-amylase, β-glucanase, and protease which is commercially available for brewing), the mash of malt : hot water = 1 : 3 (barley 50g : hot water 150 ml) was heated at the temperature program of 30 mins. at 50°C, 60 mins. at 65°C and 10 mins. at 78°C. After adding 150ml of hot water, the resulting final mash was filtered through a funnel using a filter paper. The sugar content and NP of each of the filtered liquids were determined. The sugar content (°P) was calculated by measuring the specific gravity and from a conversion table. Table 5 shows the results.

As the grist fineness gets coarser, NP is reduced drastically. On the other hand, since the extract yield also decreases, there will be a limitation of grist fineness. As for non-malt ingredient, the ones including barley wherein the husk is partly removed is also considered to be used. The relation of EBC husk fraction (grist fineness), extract and NP is predicted to change depending on the shape of barley grains. Therefore, using the relational expression obtained by each form of barley grains, grist composition can be selected accordingly from the expected reduction amount of NP in filtrated wort.

**Table 5**

| Experimental | EBC husk fraction Rate % | Extract yield (Experimental 6 as 100) | NP in terms of 11° (ppb) |
|---|---|---|---|
| 6 | 0.1 | 100 | 15.8 |
| 7 | 53 | 95 | 9.6 |
| 8 | 82 | 87 | 7.6 |
| 9 | 90 | 80 | 8.6 |

### (Test Example 2)

As with the case of Test Example 1, a test was carried out with regard to the relation between the grist fineness of barley and the quality of filtrated wort in more detail. Table 6 shows the results of EBC husk fraction rate (%), NP, and extract yield in each experimental. The results of Table 6 are also shown in Fig. 2. In the figure, ◆ denotes the value of NP (ppb), ■ denotes the extract yield (%) when the experimental 10 (the husk fraction rate 0.1%) is expressed as 100.

**Table 6**

| Experimental | 10 | 11 | 12 | 13 | 14 | 15 | 16 | 17 |
|---|---|---|---|---|---|---|---|---|
| EBC husk fraction Rate (%) | 0.1 | 32.6 | 38.9 | 48.9 | 53.0 | 60.7 | 82.0 | 90.0 |
| NP in terms of 11° (ppb) | 15.8 | 11.0 | 10.7 | 10.2 | 9.6 | 9.4 | 7.6 | 8.6 |
| Extract yield (Experimental 10 as 100) | 100 | 95.3 | 95.6 | 93.2 | 94.6 | 91.6 | 87.2 | 79.7 |

### Example 3 [Production of fermented beverages from prepared wort with changes in the grist fineness of malt]

Beer was produced by the following steps: filtrated wort was obtained by filtering final mash which was produced from the mixture of malt (equal or greater than 70%), adjunct (rice, corn, starch) and hot water according to a conventional method; hops were added to said filtrated wort, such wort was then boiled and trubs were removed after boiling; after the wort was cooled then wort concentration was adjusted to 11° P. The cold wort was fermented by adding yeast, and stored at 0 °C after fermentation. Malt ingredient milled coarsely was compared to the ones with usual grist fineness. The grist fineness of malt and the evaluation of fermented beer are shown in Table 7 and Table 8, respectively. Besides, in Table 8, the extent of a stale flavor was evaluated on a rating scale of 0 (not perceptible) - 3 (strong) by five panelists and the average value was obtained. For the evaluation of flavor stability, beer samples were subjected to accelerated aging (37° C for 5 days).

As shown in Table 8, the beer brewed using coarsely milled grist (51% EBC husk fraction) showed lower intensity of stale flavor compared to control beer which was brewed from grist having a 21% husk fraction. In the present invention, NP in cold wort was determined both control and test samples. The results show that there is a difference of 0.6 ppb in NP between the control sample of NP 4.5 ppb and a test sample of NP 3.9 ppb. This result implys that there is a difference of equal or greater than 1 ppb of NP in filtrated wort.

**Table 7**

| Experimental | Husks (Sieve 1) | grits (Sieve 2) | Fine grits I (Sieve 3) | Fine grits II (Sieve 4) | Flour (Sieve 5) | Fine Flour (Sieve bottom) |
|---|---|---|---|---|---|---|
| Test | 51% | 8% | 14% | 11% | 4% | 13% |
| Control | 21 | 15 | 23 | 16 | 8 | 17 |

**Table 8**

| Evaluation of Beer | | | | | | | |
|---|---|---|---|---|---|---|---|
| Experimental | Original Extract (° P) | Bitterness ness Units (BU) | Apparent Extract (%) | Beer NP (ppb) | Sensory Evaluation 1 (Aroma) | Sensory Evaluation 2 (Stale flavor before aging) | Sensory Evaluation 3 (Stale Flavor after aging) |
| Test | 11.2 | 24.3 | 1.82 | 1.6 | full-bodied and clear taste. | 0.2 | 1.4 |
| Control | 11.2 | 24.9 | 1.66 | 1.8 | full-bodied but with slight stale flavor. | 0.4 | 2.0 |

### Industrial Applicability

In the present invention, fermented alcoholic beverages such as beer and the like, in which the development of a stale flavor is suppressed, can be produced as a result of reducing the content of a stale flavor-causing substance in wort by adjusting the grist fineness of the grains of a cereal raw material used in producing fermented alcoholic beverages such as beer and the like, i.e. by grinding the grains of a cereal raw material more coarsely than usual. Besides, in the present invention, finished fermented alcoholic beverages, wherein a stale flavor is significantly reduced by adjusting the grist fineness of a whole-grain cereal raw material containing whole or part of the husk by applying the trans-2-nonenal potential in total filtrated wort as an indicator, can be produced. Further, according to the present invention, fermented alcoholic beverages, in which the development of a stale flavor is suppressed, can be produced by convenient and assured process, since the grist fineness determined by applying the 'above-mentioned trans-2-nonenal potential as an indicator can be adjusted as the EBC husk fraction rate and milling can be carried out thereby. Thus the present invention has quite a distinguished effect on the production of fermented alcoholic beverages.

## Claims

1. A process for producing fermented alcoholic beverages wherein a stale flavor-causing substance in wort is reduced by grinding the grains of a whole-grain cereal raw material containing whole or part of the husk more coarsely than usual, in the course of producing fermented alcoholic beverages such as beer and the like.

2. The process for producing fermented alcoholic beverages according to claim 1, wherein the grist fineness of the whole-grain cereal raw material containing whole or part of the husk is adjusted by applying a trans-2-nonenal potential i n the total filtrated wort as an indicator so that the trans-2-nonenal potential is reduced by at least 1 ppb in terms of sugar content 11° P.

3. The process for producing fermented alcoholic beverages according to claim 1 or 2, wherein the whole-grain cereal raw material containing whole or part of the husk is malt or barley.

4. The process for producing fermented alcoholic beverages according to claim 1 or 2, wherein the grist fineness is over 30 in the EBC husk fraction % (EBC sieve 1) when the whole-grain cereal raw material containing whole or part of husk is malt.

5. The process for producing fermented alcoholic beverages according to claim 4, wherein the EBC husk fraction % (EBC sieve 1) is 40 - 80.
